# EUROPÄISCHE PATENTANMELDUNG

(11) **EP 4 528 233 A1**
(43) Veröffentlichungstag der Anmeldung: **26.03.2025**
(21) Anmeldenummer: 24201253.2
(22) Anmeldetag: 19.09.2024
(51) Int. Cl.: G01F 1/66, G01F 1/667

(54) **ULTRASCHALLDURCHFLUSSMESSGERÄT UND MESSANORDNUNG**

(30) Priorität: 22.09.2023 DE 102023125768
(71) Anmelder: Krohne AG, 4019 Basel (CH)
(72) Erfinder: Botter, Eduard, 2291 BK Wateringen (NL)
(74) Vertreter: Gesthuysen Patentanwälte

(57) **Zusammenfassung**

Dargestellt und beschrieben ist ein Ultraschalldurchflussmessgerät (1) zum Einsetzen in ein erstes Rohr (3) eines Rohrsystems (2) an der Stelle einer Flanschverbindung des Rohrsystems (2), mit einem eine Längsachse (l_{M}) aufweisenden Messrohr (5) zum Führen eines fließfähigen Mediums und mit einem Flansch (6) zum zumindest mittelbaren Befestigen des Messrohrs (4) im Rohrsystem (2), wobei das Messrohr (5) wenigstens eine erste Wandlertasche (7) zur Aufnahme eines ersten Ultraschallwandlers (8) und wenigstens eine zweite Wandlertasche (9) zur Aufnahme eines zweiten Ultraschallwandlers (10) aufweist,
wobei in der ersten Wandlertasche (7) ein erster Ultraschallwandler (8) angeordnet ist, der als Ultraschallsender und/oder als Ultraschallempfänger ausgebildet ist und wobei in der zweiten Wandlertasche (9) ein zweiter Ultraschallwandler (10) angeordnet ist, der als Ultraschallsender und/oder als Ultraschallempfänger ausgebildet ist, das sich dadurch auszeichnet, dass das Messrohr (5) als dünnwandiges Rohr (12) ausgebildet ist, derart, dass die Wandstärke (w) des Messrohrs (5) geringer ist als die Ausdehnung (a) der Wandlertaschen (7, 9) senkrecht zur Längsachse (l_{M}) des Messrohrs, und dass sich die Wandlertaschen (7, 9) in den Außenraum (13) des Messrohres (5) erstrecken.

## Beschreibung

Die Erfindung betrifft ein Ultraschalldurchflussmessgerät zum Einsetzen in ein erstes Rohr eines Rohrsystems an der Stelle einer Flanschverbindung des Rohrsystems, mit einem eine Längsachse aufweisenden Messrohr zum Führen eines fließfähigen Mediums und mit einem Flansch zum zumindest mittelbaren Befestigen des Messrohrs im Rohrsystem, wobei das Messrohr wenigstens eine erste Wandlertasche zur Aufnahme eines ersten Ultraschallwandlers und wenigstens eine zweite Wandlertasche zur Aufnahme eines zweiten Ultraschallwandlers aufweist, wobei in der ersten Wandlertasche ein erster Ultraschallwandler angeordnet ist, der als Ultraschallsender und/oder als Ultraschallempfänger ausgebildet ist und wobei in der zweiten Wandlertasche ein zweiter Ultraschallwandler angeordnet ist, der als Ultraschallsender und/oder als Ultraschallempfänger ausgebildet ist.

Darüber hinaus betrifft die Erfindung eine Messanordnung umfassend ein erfindungsgemäßes Ultraschalldurchflussmessgerät und zumindest ein erstes Rohr des Rohrsystems, wobei das Messrohr in das erste Rohr eingesetzt ist.

Die in Rede stehenden Ultraschalldurchflussmessgeräte sind aus dem Stand der Technik bekannt und dienen zur Bestimmung der Fließgeschwindigkeit und damit des Durchflusses des fließfähigen Mediums.

Aus dem Stand der Technik ist es bekannt, dass Ultraschalldurchflussmessgeräte einen Teil des Rohrsystems bilden. Diese auch als Inline-Durchflussmessgeräte bezeichneten Ultraschalldurchflussmessgeräte werden üblicherweise mittels zweier Flansche in das Rohrsystem eingesetzt und bilden so einen eigenständigen Teil der Fließstrecke des Mediums. Das Messrohr muss demzufolge alle Dichtigkeits- und Festigkeitsanforderungen erfüllen, die das Rohrsystem auch erfüllen muss, insbesondere hinsichtlich Druck- und Temperaturfestigkeit. Da die Ultraschallwandler in das Messrohr eingesetzt werden, müssen auch die dazu vorgesehenen Wandlertaschen sowie die Verbindungen zwischen Wandlertasche und Ultraschallwandler den Festigkeitsanforderungen entsprechen. Da die Ultraschallwandler aus dem Messrohr herausragen, bedarf es auch einer - zumindest mechanischen - Abschirmung der Wandler in Form eines Gehäuses.

Anders ist die Situation bei den eingangs genannten Ultraschalldurchflussmessgeräten, deren Messrohr in ein Rohr eines Rohrsystems eingesetzt werden, also in den Innenraum des Rohres. Diese Ultraschalldurchflussmessgeräte bilden also keinen eigenständigen Teil der Fließstrecke des Mediums. Üblicherweise kommen an der Montagestelle solcher Ultraschalldurchflussmessgeräte ein erstes Rohr mit einem ersten Rohrflansch und ein zweites Rohr mit einem zweiten Rohrflansch des Rohrsystems zusammen, wobei der erste Rohrflansch und der zweite Rohrflansch dann eine Flanschverbindung zwischen dem ersten Rohr und dem zweiten Rohr realisieren. Zur Befestigung des Messrohrs in dem Rohrsystem wird das Messrohr in das erste Rohr oder das zweite Rohr des Rohrsystems eingesetzt und der Flansch des Messrohrs wird zwischen dem ersten Rohrflansch und dem zweiten Rohrflansch eingespannt. Oft kann das Messrohr von dem Medium weitestgehend umgeben werden, sodass sich die Frage der Druckfestigkeit praktisch nicht stellt, auch Dichtigkeitsaspekte sind unkritisch. Bekannte Ultraschalldurchflussmessgeräte sind oft komplex aufgebaut und in ihrem Einsatz unflexibel.

Der Erfindung liegt die Aufgabe zugrunde, das eingangs genannte Ultraschalldurchflussmessgerät so weiterzubilden, dass es einen einfachen Aufbau hat und von der Anwendung her flexibel ist. Darüber hinaus ist es Aufgabe der Erfindung eine Messanordnung umfassend das erfindungsgemäße Ultraschalldurchflussmessgerät anzugeben.

Die Aufgabe ist bei dem erfindungsgemäßen Ultraschalldurchflussmessgerät zunächst und im Wesentlichen dadurch gelöst, nämlich mit den Merkmalen des Kennzeichnungsteils des Patentanspruchs 1, dass das Messrohr als dünnwandiges Rohr ausgebildet ist, derart, dass die Wandstärke des Messrohrs geringer ist als die Ausdehnung der Wandlertaschen senkrecht zur Längsachse des Messrohrs. Zudem erstrecken sich bei dem erfindungsgemäßen Ultraschalldurchflussmessgerät die Wandlertaschen in den Außenraum des Messrohres.

Erfindungsgemäß ist erkannt worden, dass die physikalischen Randbedingungen bei Verwendung des Messrohrs in dem ersten Rohr des Rohrsystems (kein Differenzdruck zwischen Innen- und Außenraum des Messrohrs) sehr weitreichende konstruktive Maßnahmen ermöglichen. Die dünnwandige Bauweise des Messrohres ist nicht nur vorteilhaft, weil dies in einer erheblichen Reduktion des für die Herstellung benötigten Materials resultiert, es ist auch vorteilhaft, weil dünnwandige Messrohre den Einsatz von generischen Herstellungsverfahren (zum Beispiel 3D-Druck) ermöglichen, die sonst möglicherweise als nicht sinnvoll erschienen. Ferner führt der dünnwandige Messrohraufbau auch dazu, dass der Innenquerschnitt des Rohrs des Rohrsystems, in das das Messrohr eingesetzt ist, nur minimal reduziert wird.

Dünnwandig im Sinne der vorliegenden Patentanmeldung bedeutet, dass die Wandstärke des Messrohrs geringer ist als die Ausdehnung der Wandlertaschen senkrecht zur Längsachse des Messrohrs. Die absolute Wandstärke ist abhängig von dem Durchmesser des Messrohres und wird von dem Fachmann entsprechend gewählt.

Die erfindungsgemäße Ausgestaltung ermöglicht eine deutliche Materialeinsparung und somit eine Reduktion der Materialkosten.

Erfindungsgemäß sind die Wandlertaschen zudem so im Messrohr ausgebildet, dass sie sich in den Außenraum des Messrohres erstrecken. Dies hat den Vorteil, dass die Wandlertaschen nicht in den Innenraum des Messrohres und damit nicht in den Strömungsquerschnitt des Mediums hineinragen und es somit nicht zu einer Störung des Mediums durch die Wandlertaschen kommt, die beispielsweise in Wirbelbildung resultieren könnte.

Um das Messrohr in ein Rohr des Rohrsystems einsetzen und an dem Rohr befestigen zu können, ist ein Flansch vorgesehen. Eine besonders bevorzugte Ausgestaltung des erfindungsgemäßen Ultraschalldurchflussmessgerätes ist dadurch ausgezeichnet, dass das Messrohr und der Flansch einstückig ausgebildet sind. Einstückig bedeutet, dass das Messrohr und der Flansch nicht aus zwei miteinander verbundenen Werkstücken bestehen, sondern aus einem einzigen Werkstück gefertigt oder als ein einziges Werkstück erzeugt werden. Dies weist den Vorteil auf, dass der Flansch und das Messrohr nicht miteinander verbunden werden müssen. Hierdurch kann auf Verbindungsmittel verzichtet werden, zudem wird der Herstellungsprozess vereinfacht. Da Messrohr und Flansch einstückig sind, kann es auch nicht zu Undichtigkeiten in einem - nicht vorhandenen - Verbindungsbereich kommen. Zudem ist es nicht notwendig, verschiedene Materialeigenschaften aufeinander abzustimmen, wie dies der Fall wäre, wenn Flansch und Messrohr aus verschiedenen Materialien hergestellt wären. Bevorzugt sind auch die Wandlertaschen einstückig mit dem Messrohr ausgestaltet.

In einer besonders bevorzugten Variante sind das Messrohr und der Flansch aus einem Kunststoff hergestellt. Insbesondere bietet sich hier die Verwendung von mit Glykol modifiziertem Polyethylenterephthalat (kurz PETG), von Acrylnitril-Butadien-Styrol (kurz ABS), von Polypropylen (kurz PP), von Acrylnitril-Styrol-Acrylester (kurz ASA) oder Nylon an. Ebenfalls vorteilhaft ist die Verwendung von Polyetheretherketon (kurz PEEK) als Material zur Herstellung des Messrohres und des Flansches.

Die Verwendung von Kunststoff weist unter anderem den Vorteil auf, dass das Messrohr und der Flansch zum einen ein geringes Gewicht aufweisen. Bei der Verwendung von elektrisch nicht leitfähigem Kunststoff ergibt sich zudem der Vorteil, dass in den Wandlertaschen angeordnete Ultraschallwandler automatisch elektrisch voneinander isoliert sind. Zudem ist auch die Schallausbreitung in Kunststoffen im Allgemeinen schlechter als in Metallen, so dass die Problematik des Übertragens von parasitärem Ultraschall über das Messrohr reduziert ist.

Besonders bevorzugt sind das Messrohr und der Flansch mittels eines generativen Fertigungsverfahrens hergestellt. Hierdurch wird der Herstellungsaufwand weiter minimiert.

Gemäß einer weiteren besonders bevorzugten Ausgestaltung sind das Messrohr und der Messrohrflansch aus Epoxidharz hergestellt.

Gemäß einer weiteren Ausgestaltung des Ultraschalldurchflussmessgeräts sind das Messrohr und der Flansch aus unterschiedlichen Materialien hergestellt. Beispielsweise ist der Flansch aus einem druckfesten Material, beispielsweise Epoxidharz hergestellt und das Messrohr ist aus einem oben genannten Kunststoff hergestellt. Gemäß dieser Ausgestaltung werden das Messrohr und der Flansch nachträglich miteinander verbunden.

Wie einleitend beschrieben, weist das Messrohr wenigstens zwei Wandlertaschen zur Aufnahme von zwei Ultraschallwandlern auf. Einer der Ultraschallwandler ist wenigstens als Ultraschallsender ausgebildet, der andere Ultraschallwandler ist wenigstens als Ultraschallempfänger ausgebildet. Bevorzugt sind beide Ultraschallwandler sowohl als Ultraschallsender als auch als Ultraschallempfänger ausgebildet. Zusammen spannen die beiden Ultraschallwandler einen Messpfad auf. Um die Messgenauigkeit zu erhöhen, ist es sinnvoll, mehr als einen Messpfad zu realisieren, wobei die Messpfade vorzugsweise durch verschiedene Bereiche des Messrohrs verlaufen. Bei einer bevorzugten Ausgestaltung des erfindungsgemäßen Ultraschalldurchflussmessgerätes weist das Messrohr wenigstens eine weitere Wandlertasche zur Aufnahme eines weiteren Ultraschallwandlers, eines Reflektors oder eines Abschlusskörpers zur Realisierung weiterer Messpfade auf. Besonders bevorzugt weist das Messrohr nicht nur eine weitere Wandlertasche, sondern eine Mehrzahl an weiteren Wandlertaschen zur Aufnahme weiterer Ultraschallwandler, Reflektoren oder Abschlusskörper zur Realisierung weiterer Messpfade auf. In den Wandlertaschen müssen nicht zwingend Ultraschallwandler angeordnet sein, vielmehr können auch Reflektoren in den Wandlertaschen angeordnet sein, an denen ein Ultraschallsignal reflektiert wird. Die erfindungsgemäße Ausgestaltung weist neben dem Vorteil der Möglichkeit der Realisierung weiterer Messpfade den Vorteil auf, dass die Messrohre unabhängig von ihrem konkreten Einsatz vorgefertigt werden können. Je nach Messsituation können die Messrohre individuell mit Ultraschallwandlern oder Reflektoren bestückt werden. Zudem ist erfindungsgemäß vorgesehen, dass auch Abschlussstücke in den Wandlertaschen angeordnet sein können. Diese Abschlussstücke bilden dann lediglich einen Teil der Messrohrinnenwand und werden überall dort in die Wandlertaschen eingesetzt, wo weder ein Ultraschallwandler noch ein Reflektor vorgesehen ist. Die beschriebenen Messrohre können also sehr flexibel eingesetzt werden, weil sie mit geringem Aufwand ganz unterschiedlich konfiguriert werden können. So können bei gleicher Anzahl von Ultraschallwandlern ganz unterschiedliche Messpfade realisiert werden, es können mit ganz unterschiedlichen Anzahlen von Ultraschallwandlern aber auch sehr unterschiedlich komplexe Messpfadanordnungen implementiert werden. Das alles ist möglich mit einer einzigen Art von vorgefertigtem Messrohr, wenn eine entsprechende Anzahl von Wandlertaschen vorgesehen ist.

Die Längsachsen der Wandlertaschen stehen in einer Variante senkrecht auf der Längsachse des Messrohres. In einer alternativen Variante stehen die Längsachsen der Wandlertaschen in einem Winkel ungleich 90° auf der Längsachse des Messrohres. In einer weiteren Variante stehen die Längsachsen verschiedener Wandlertaschen in verschiedenen Winkeln auf der Längsachse des Messrohres. Beispielsweise beträgt der Winkel zwischen der Längsachse des Messrohres und der Längsachse von zumindest einem Teil der Wandlertaschen zwischen 30° und 50°, insbesondere ungefähr 45°. Die Ausrichtung der Wandlertaschen ist dabei abhängig von den zu realisierenden Messpfaden. Gemäß einer Ausgestaltung weisen die Wandlertaschen zumindest teilweise unterschiedliche Winkel zu der Längsachse des Messrohrs auf, wobei vorzugsweise jeweils zwei Ultraschallwandler, die einen gemeinsamen Messpfad realisieren, gleiche Winkel zur Längsachse des Messrohrs aufweisen.

Gemäß einer Ausgestaltung des erfindungsgemäßen Ultraschalldurchflussmessgeräts ist wenigstens ein weiterer Sensor, insbesondere ein Drucksensor und/oder ein Temperatursensor, in einer der Wandlertaschen angeordnet. Hierdurch ergibt sich der Vorteil, dass der Drucksensor und/oder der Temperatursensor mediumnah, insbesondere mediumberührend in dem Ultraschalldurchflussmessgerät angeordnet werden kann, ohne jedoch die Strömung des Mediums zu beeinflussen. Bevorzugt können mehrere Drucksensoren und/oder Temperatursensoren in mehreren Wandlertaschen angeordnet sein, wodurch zum einen an mehreren Stellen die Temperatur oder der Druck gemessen werden können, zum anderen bei Ausfall eines der Sensoren mit einem anderen Sensor Messungen durchgeführt werden können.

Um die Ultraschallwandler, die Reflektoren, die Abschlusskörper und/oder die Sensoren - wie Temperatursensor und/oder Drucksensor - in der Wandlertasche befestigen zu können, sind erfindungsgemäß verschiedene Ausführungsformen vorgesehen.

In einer ersten Variante weisen die Ultraschallwandler, die Reflektoren, die Abschlusskörper und/oder die Sensoren und die Wandlertaschen zueinander korrespondierende Haltevorsprünge und Haltevertiefungen auf. Die Haltevorsprünge greifen in die Haltevertiefungen ein, sodass eine formschlüssige Verbindung hergestellt ist. Die Haltevorsprünge sind in einer Variante an den in die Wandlertaschen einzusetzenden Elementen ausgebildet und die Haltevertiefungen in den Wandlertaschen. In einer anderen Variante sind die Haltevorsprünge in den Wandlertaschen ausgebildet und die Haltevertiefungen an den einzusetzenden Elementen. Ebenfalls vorgesehen ist, dass sowohl Haltevertiefungen als auch Haltevorsprünge an den einzusetzenden Elementen und korrespondierend in den Wandlertaschen ausgebildet sind. In anderen Ausführungsbeispielen werden die Haltevorsprünge durch O-Ringe gebildet, die in umlaufenden Ausnehmungen in der Wandlertasche, in dem Ultraschallwandler, in den Reflektoren, in dem Abschlusskörper und/oder in den Sensoren gehalten sind.

Besonders bevorzugt sind die Haltevorsprünge und die Haltevertiefungen in Umfangsrichtung der Wandlertaschen und der einzusetzenden Elemente unterbrochen ausgebildet. Hierdurch ist eine genaue Positionierung der einzusetzenden Elemente ermöglicht.

In einer weiteren Variante sind an den einzusetzenden Elementen und/oder an den Wandlertaschen wenigstens ein federndes Rastelement oder mehrere federnde Rastelemente vorgesehen. Zusätzlich oder alternativ ist wenigstens ein elastisches Rastelement oder sind mehrere elastische Rastelemente vorgesehen. Die federnden und/oder elastischen Rastelemente sind an den einzusetzenden Elementen und/oder in den Wandlertaschen angeordnet. Korrespondierend hierzu sind Haltevorsprünge vorgesehen. Beim Einführen der einzusetzenden Elemente in die Wandlertaschen werden dann die federnden und/oder elastischen Elemente durch den Haltevorsprung vorgespannt, um nach Vorbeiführen des Haltevorsprungs wieder in einen zumindest teilweise entspannten Zustand zurückzukehren und somit einen den Haltevorsprung haltenden Vorsprung auszubilden.

Vorzugsweise weist das in Rede stehende Ultraschalldurchflussmessgerät eine Steuer- und Auswerteeinheit auf. Die Steuer- und Auswerteeinheit ist außerhalb des Rohrsystems vorgesehen, in das das Messrohr eingesetzt ist. Um die elektrischen Leitungen von den Ultraschallwandlern zu der Steuer- und Auswerteeinheit zu führen, sind gemäß einer Ausgestaltung der Erfindung die elektrischen Leitungen von den Ultraschallwandlern, vorzugsweise durch den Flansch, zu der Steuer- und Auswerteeinheit geführt.

Besonders bevorzugt ist der Flansch zumindest teilweise durch eine bedruckte Leiterplatte gebildet, die einen Teilabschnitt der elektrisch leitenden Verbindung zwischen den Ultraschallwandlern und der Steuer- und Auswerteeinheit realisiert.

Der Flansch realisiert gemäß dieser Ausgestaltung eine elektrische Durchführung. Hierzu weist der Flansch gemäß einer Ausgestaltung einerseits Kontaktelemente zur Kontaktierung zumindest der Ultraschallwandler auf und andererseits wenigstens ein Kontaktelement zur Kontaktierung der Steuer- und Auswerteeinheit. Besonders bevorzugt weist der Flansch für jeden Ultraschallwandler ein Kontaktelement auf. Dabei sind die Kontaktelemente für die Ultraschallwandler im montierten Zustand im Innenraum des Rohrsystems angeordnet und das Kontaktelement zu Anbindung an die Steuer- und Auswerteeinheit ist im Außenraum des Rohrsystems angeordnet.

Diese Ausgestaltung weist den Vorteil auf, dass kein weiteres Bauteil für die elektrische Durchführung in den Außenraum des Rohrsystems vorhanden sein muss.

Gemäß einer weiteren Ausgestaltung weist das Ultraschalldurchflussmessgerät eine Steuer- und Auswerteeinheit auf, die im montierten Zustand außerhalb des Rohrsystems angeordnet ist, wobei die Steuer- und Auswerteeinheit zumindest mit den Ultraschallwandlern über elektrische Leitungen verbunden ist, und wobei das Ultraschalldurchflussmessgerät eine Leiterplatte aufweist, wobei die Leiterplatte im montierten Zustand derart zwischen dem ersten Rohrflansch des ersten Rohrs und dem zweiten Rohrflansch des zweiten Rohrs angeordnet ist, dass sie die elektrische Verbindung zumindest der Ultraschallwandler von dem Innenraum des Rohrsystems in den Außenraum des Rohrsystems realisiert.

Die Leiterplatte weist Kontaktelemente zumindest für die Ultraschallwandler auf, die im montierten Zustand im Innenraum des Rohrsystems angeordnet sind, und vorzugsweise für den wenigstens einen weiteren Sensor, sofern vorhanden, und vorzugsweise ein Kontaktelement für die Kontaktierung mit der Steuer- und Auswerteeinheit, das im montierten Zustand außerhalb des Rohrsystems angeordnet ist. Die Steuer- und Auswerteeinheit kann über ein Kabelverbindung mit dem Kontaktelement der Leiterplatte verbunden sein. Zudem kann die Steuer- und Auswerteeinheit auch unmittelbar an der Leiterplatte angeordnet sein. Beispielsweise kann die Steuer- und Auswerteeinheit mit der Leiterplatte mittels einer Steckverbindung oder einer Klemmverbindung oder einer Lötverbindung verbunden sein. Die Steuer- und Auswerteeinheit kann insbesondere als weitere Leiterplatte ausgebildet sein oder eine weitere Leiterplatte aufweisen.

Weiterhin kann die Leiterplatte auch unmittelbar mit der Steuer- und Auswerteeinheit bestückt sein.

In den zuletzt genannten Ausgestaltungen ist keine weitere Kabelverbindung der Steuer- und Auswerteeinheit und der Leiterplatte notwendig.

Die Steuer- und Auswerteeinheit kann auch in dem Fall, in dem der Flansch des Messrohrs als Leiterplatte ausgebildet ist, an dieser Leiterplatte entsprechend einer der zuvor beschriebenen Verbindungen angeordnet sein.

Die Leiterplatte wird zur Montage zwischen den ersten Rohrflansch des ersten Rohrs und den zweiten Rohrflansch des zweiten Rohrs des Rohrsystems geklemmt.

Besonders bevorzugt ist der Flansch des Messrohrs an der Leiterplatte befestigt, beispielsweise sind der Flansch und die Leiterplatte miteinander verschraubt. Gemäß dieser Ausgestaltung kann der Außendurchmesser des Flansches auch kleiner als der Innendurchmesser des ersten Rohrs, in das das Messrohr eingesetzt wird, sein, sodass das Messrohr vollständig in das erste Rohr eingesetzt werden kann und lediglich durch die Anbindung an die Leiterplatte fixiert wird. Gemäß dieser Ausgestaltung klemmt der Flansch im montierten Zustand nicht zwischen dem ersten Rohrflansch und dem zweiten Rohrflansch.

In einer weiteren Variante des erfindungsgemäßen Ultraschalldurchflussmessgerätes ist das Messrohr auf seiner Außenseite mit einer elektrisch isolierenden Schicht beschichtet. Besonders bevorzugt wird die elektrisch isolierende Schicht nach der Bestückung der Wandlertaschen mit den Ultraschallwandlern realisiert, sodass die elektrischen Leitungen der Ultraschallwandler durch die elektrisch isolierende Schicht zum einen elektrisch abgeschirmt und zum anderen am Messrohr fixiert werden.

Um ein Übersprechen von Ultraschallwellen auf das Rohrsystem zu vermeiden, weist das Messrohr in einer bevorzugten Ausgestaltung auf seiner Außenseite eine akustisch isolierende Schicht auf. Hierdurch wird ein Übersprechen der Ultraschallwellen als störende Gehäusewellen minimiert.

Eine besonders bevorzugte Ausgestaltung des erfindungsgemäßen Ultraschalldurchflussmessgeräts zeichnet sich dadurch aus, dass das Messrohr einen konstanten Innenquerschnitt aufweist. In einer alternativen bevorzugten Variante weist das Messrohr entlang seiner Längsachse einen veränderlichen Innenquerschnitt auf. Durch die Wahl des Innenquerschnitts kann das Strömungsprofil des Mediums vorteilhaft beeinflusst werden.

Des Weiteren zeichnet sich eine bevorzugte Ausgestaltung des erfindungsgemäßen Ultraschalldurchflussmessgerätes dadurch aus, dass der Innendurchmesser des Messrohrs am Übergang zu der Rohrleitung dem Innenrohrleitungsdurchmesser entspricht. Durch den stetigen Übergang zwischen Rohrleitung und Messrohr wird eine Störung des Strömungsprofils minimiert. Alternativ ist der Innendurchmesser des Messrohrs am Übergang zu der Rohrleitung geringer als der Innenrohrleitungsdurchmesser.

Gemäß einer zweiten Lehre der vorliegenden Erfindung wird die eingangsdargelegte Aufgabe durch eine Messanordnung umfassend eines der zuvor beschriebenen Ultraschalldurchflussmessgeräte und zumindest das erste Rohr des Rohrsystems, wobei das Messrohr in das erste Rohr eingesetzt ist, dadurch gelöst, dass das erste Rohr und das Messrohr derart aufeinander abgestimmt sind, dass die Wandlertaschen das erste Rohr nicht berühren.

Beispielsweise kann der Durchmesser des ersten Rohrs zumindest in dem Bereich, in dem das Messrohr eingesetzt ist vergrößert sein. Besonders bevorzugt entspricht der Innendurchmesser des Messrohrs im Wesentlichen dem Innendurchmesser des zweiten Rohrs des Rohrsystems und dem Innendurchmessers des ersten Rohrs in dem Bereich, in dem der Durchmesser nicht vergrößert ist, sofern das erste Rohr nur bereichsweise eine Vergrößerung des Innendurchmessers aufweist.

Alternativ oder zusätzlich kann das Messrohr zumindest im Bereich der Wandlertaschen einen verkleinerten Messrohrquerschnitt aufweisen.

Denkbar ist ebenfalls, dass die innere Querschnittsfläche des Messrohrs derart kleiner ist als die innere Querschnittsfläche des ersten Rohrs, dass die Wandlertaschen im eingesetzten Zustand das erste Rohr nicht berühren.

Gemäß weiterer vorteilhafte Ausgestaltungen der Messanordnung wird auf die obige Beschreibung Bezug genommen, soweit diese spezielle Ausgestaltungen der Messanordnung betrifft.

Insbesondere weist die Messanordnung vorzugsweise ein zweites Rohr auf, wobei das erste Rohr einen ersten Rohrflansch aufweist und wobei das zweite Rohr einen zweiten Rohrflansch aufweist und wobei das Messrohr mit dem Messrohrflansch zwischen dem ersten Rohrflansch und dem zweiten Rohrflansch angeordnet ist oder wobei das Messrohr mit dem Messrohrflansch an einer Leiterplatte angeordnet ist, die zwischen dem ersten Rohrflansch und dem zweiten Rohrflansch eingeklemmt ist.

Im Einzelnen gibt es nun verschiedene Möglichkeiten, das erfindungsgemä-ße Ultraschalldurchflussmessgerät und die erfindungsgemäße Messanordnung auszugestalten und weiterzubilden. Hierzu wird verwiesen auf die den unabhängigen Patentansprüchen nachgeordneten Patentansprüche sowie auf die Beschreibung bevorzugter Ausführungsbeispiele in Verbindung mit der Zeichnung. In der Zeichnung zeigen
- Fig. 1: eine schematische Darstellung einer ersten Ausführungsform eines Ultraschalldurchflussmessgerätes,
- Fig. 2: ein erstes Messrohr eines Ultraschalldurchflussmessgerätes,
- Fig. 3: ein zweites Messrohr eines Ultraschalldurchflussmessgerätes,
- Fig. 4: einen Ultraschallwandler,
- Fig. 5: einen in eine Wandlertasche eingesetzten Ultraschallwandler,
- Fig. 6: eine Wandlertasche,
- Fig. 7: eine weitere Darstellung eines Messrohres,

- Fig. 8: eine Darstellung des Messrohrs und einer zusätzlichen Leiterplatte zur elektrischen Verbindung der Ultraschallwandler und der Steuer- und Auswerteeinheit,
- Fig. 9: eine Messanordnung umfassend ein Ultraschalldurchflussmessgerät und ein Rohrsystem und
- Fig. 10: eine weitere Messanordnung umfassend ein Ultraschalldurchflussmessgerät und ein Rohrsystem.

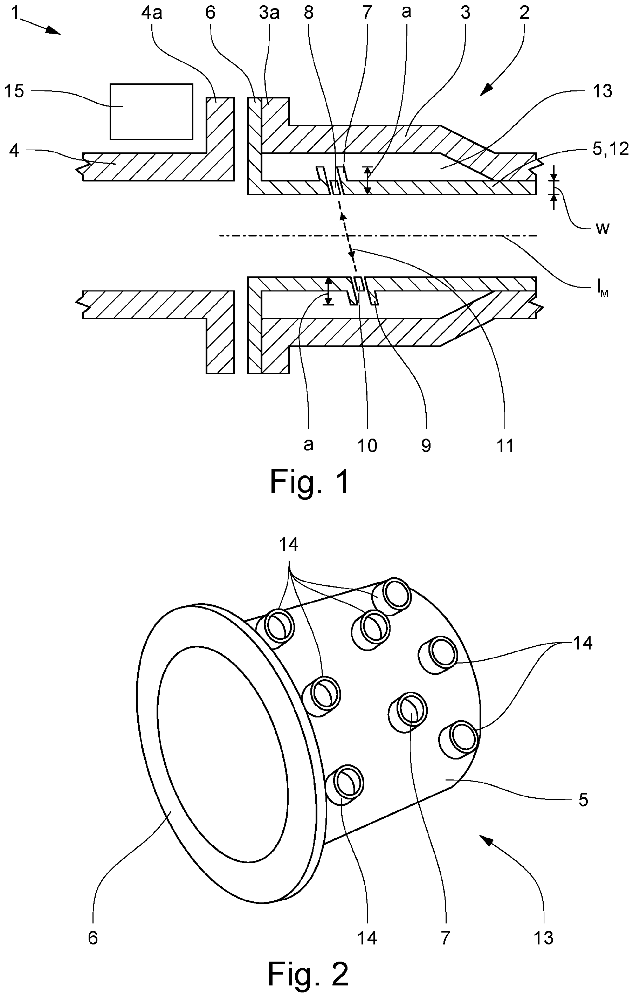

Fig. 1 zeigt eine schematische Darstellung eines Ultraschalldurchflussmessgerätes 1, das zum Einsetzen in ein Rohrsystem 2 ausgebildet ist, wobei das Rohrsystem 2 wenigstens ein erstes Rohr 3 mit einem ersten Rohrflansch 3a und ein zweites Rohr 4 mit einem zweiten Rohrflansch 4a aufweist. Das Ultraschalldurchflussmessgerät 1 weist ein eine Längsachse l_{M} aufweisendes Messrohr 5, das zum Führen eines fließfähigen Mediums dient, und einen Flansch 6 zum Befestigen des Messrohrs 5 im Rohrsystem 2 auf. Der Flansch 6 des Messrohres 5 ist im dargestellten Ausführungsbeispiel zwischen dem ersten Rohrflansch 3a und dem zweiten Rohrflansch 4a eingespannt. Um eine bessere Anschaulichkeit zu gewährleisten, weist der zweite Rohrflansch 4 einen Abstand zu dem Flansch 6 auf. Im montierten Zustand ist der Flansch 6 natürlich dicht zwischen den Rohrflanschen 3a und 4a eingeklemmt.

Das Messrohr 5 weist eine erste Wandlertasche 7 auf, in der ein erster Ultraschallwandler 8 angeordnet ist, und es weist eine zweite Wandlertasche 9 auf, in der ein zweiter Ultraschallwandler 10 angeordnet ist. Die beiden Ultraschallwandler 8, 10 sind sowohl als Ultraschallsender als auch als Ultraschallempfänger ausgebildet und senden und empfangen Ultraschallsignale, die sich entlang eines Messpfades 11 ausbreiten. Das Messrohr 5 ist als dünnwandiges Rohr 12 ausgebildet und zeichnet sich dadurch aus, dass die Wandstärke w des Messrohres 11 geringer ist als die Ausdehnung a der Wandlertaschen 7, 9 senkrecht zur Längsachse l_{M} des Messrohres 5. Zudem erstrecken sich die Wandlertaschen 7, 9 in den Außenraum 13 des Messrohres 5. Wie aus den Figuren ersichtlich, erstrecken sich die Wandlertaschen 7, 9 ausschließlich in den Außenraum 13 des Messrohres 5, sie ragen also nicht in den Innenraum des Messrohres 5. Dabei berühren die Wandlertaschen das erste Rohr 3 nicht, sodass im Betrieb ein Übersprechen auf das erste Rohr vermieden oder zumindest reduziert werden kann. Hierfür ist der Durchmesser des ersten Rohrs 3 im Bereich des Messrohrs 5, insbesondere im Bereich der Wandlertaschen 7 vergrößert.

Eine Steuer- und Auswerteeinheit 15 dient zum Ansteuern der Ultraschallwandler 8, 10 sowie zum Auswerten der Ultraschallsignale. Die elektrischen Zuleitungen zu den Ultraschallwandlern 8, 10 sind in Fig. 1 nicht dargestellt. Die Steuer- und Auswerteeinheit 15 liegt außerhalb des Rohrsystems 2 und damit auch außerhalb des Messrohrs 5.

Wie aus Fig. 1 ersichtlich, sind das Messrohr 5 und der Flansch 6 einstückig ausgebildet. Vorliegend sind das Messrohr 5 und der Flansch 6 mittels eines generativen Fertigungsverfahrens aus Kunststoff hergestellt, nämlich mittels 3D-Druck. Alternativ kann der komplette Einsatz umfassend das Messrohr 5 und den Messrohrflansch 6 auch aus Epoxidharz gefertigt sein.

Fig. 2 zeigt eine weitere Ausgestaltung des Messrohres 5 mit Flansch 6 für das Ultraschalldurchflussmessgerät 1. Das Messrohr 5 weist eine Mehrzahl an Wandlertaschen 14 auf, in denen Ultraschallwandler, Reflektoren, Sensoren wie beispielsweise Temperatursensoren und Drucksensoren und Abschlussstücke aufgenommen werden können. Abschlussstücke verschließen Wandlertaschen, sodass eine durchgehende Messrohrinnenfläche resultiert. Je nach Bestückung des Messrohres 5 lässt sich eine Mehrzahl weiterer Messpfade realisieren.

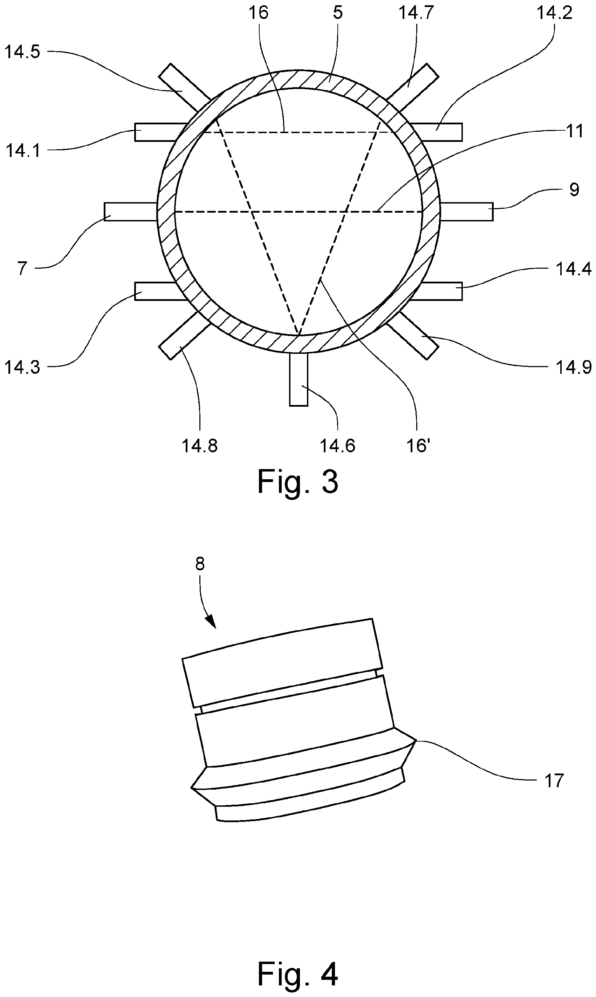

Fig. 3 zeigt einen Querschnitt eines Messrohrs 5. Neben der ersten Wandlertasche 7, in der ein erster Ultraschallwandler 8 angeordnet ist, und der zweiten Wandlertasche 9, in der ein zweiter Ultraschallwandler 10 angeordnet ist, weist das Messrohr 5 eine Mehrzahl an weiteren Wandlertaschen 14.1, 14.2, 14.3, 14.4, 14.5, 14.6 14.7, 14.8 und 14.9 auf. In den Wandlertaschen 14.1 und 14.2 sind ebenfalls zwei Ultraschallwandler angeordnet, die aber in der Darstellung nicht sichtbar sind. Durch diese beiden Ultraschallwandler wird ein zweiter Messpfad 16 realisiert. In den Wandlertaschen 14.3 und 14.4 sind lediglich Abschlussstücke angeordnet, die bündig mit der Innenwand des Messrohres 5 abschließen. Die Abschlussstücke können durch weitere Ultraschallwandler ersetzt werden, sofern die Realisierung eines weiteren Messpfades gewünscht ist. In den Wandlertaschen 14.5 und 14.7 sind ebenfalls zwei Ultraschallwandler angeordnet. In der Wandlertasche 14.6 ist ein Reflektor angeordnet. So wird ein weiterer Messpfad 16' realisiert. In der Wandlertasche 14.8 ist ein Temperatursensor zur Messung der Temperatur des Mediums angeordnet. Die Wandlertasche 14.9 nimmt einen Drucksensor zur Bestimmung des Drucks auf.

Fig. 4 zeigt schematisch einen Ultraschallwandler 8, der in eine Wandlertasche 7 eingesetzt werden kann. Der Ultraschallwandler 8 weist einen Haltevorsprung 17 auf, der im eingesetzten Zustand des Ultraschallwandlers 8 in eine entsprechende Haltevertiefung 18 der Wandlertasche 7 eingreift, sodass der Ultraschallwandler formschlüssig in der Wandlertasche gehalten werden kann. Der dargestellte Ultraschallwandler kann also einfach austauschbar in einer Wandlertasche angeordnet werden.

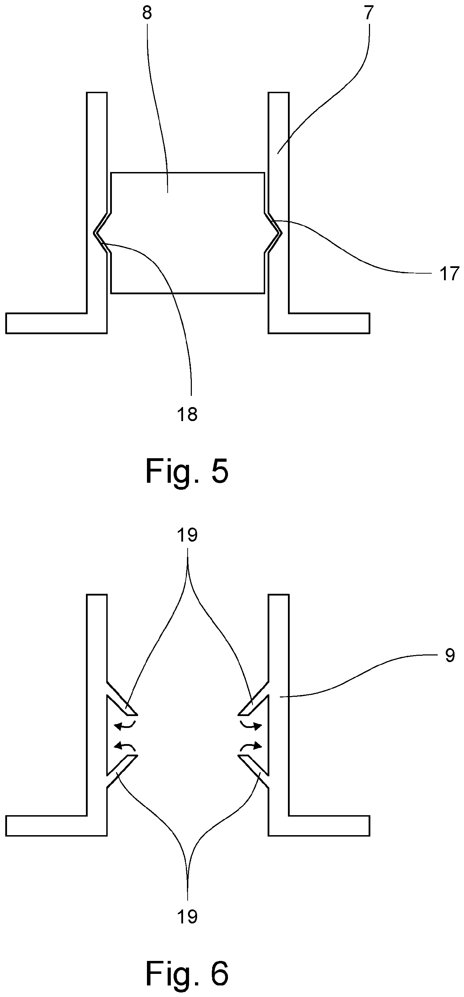

Fig. 5 zeigt eine schematische Darstellung des in die Wandlertasche 7 eingesetzten Ultraschallwandlers 8. Damit der Ultraschallwandler 8 durch die Wandlertasche 7 bis zur Haltevertiefung 18 eingeführt werden kann, weist der Haltevorsprung 17 eine Elastizität auf, die ein Verformen des Haltevorsprungs 17 ermöglicht. Alternativ kann auch die Wandlertasche 7 elastisch ausgebildet sein und ein leichtes Einsetzen des Ultraschallwandlers 8 in die Wandlertasche ermöglichen.

Fig. 6 ist eine schematische Darstellung eines Querschnitts einer Wandlertasche 9, an der federnde Halteelemente 19 ausgebildet sind. Wird ein Ultraschallwandler 10, der einen Haltevorsprung aufweist, in die Wandlertasche 9 eingesteckt, so werden die federnden Halteelemente 19 durch den Haltevorsprung in Pfeilrichtung elastisch ausgelenkt. Sobald der Haltevorsprung an den federnden Halteelementen 19 vorbeigeführt ist, gehen diese wieder in ihre Ausgangsposition zurück und halten den Ultraschallwandler - je nach konkreter Ausgestaltung - form- und/oder kraftschlüssig. Mit generischen Fertigungsverfahren lassen sich mittlerweile sehr filigrane Strukturen herstellen, sodass eine Vielzahl praktikabler Haltekonstruktionen realisierbar sind.

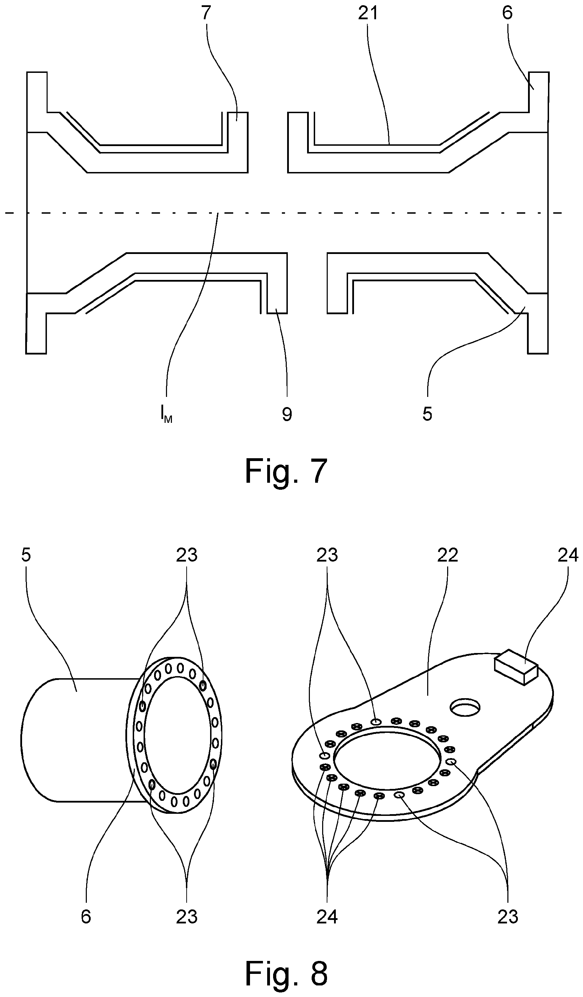

Fig. 7 ist eine schematische Darstellung eines weiteren Messrohres 5. Das Messrohr 5 ist auf seiner Außenseite mit einer akustisch isolierenden Schicht 21 beschichtet. Zudem weist das Messrohr 5 einen entlang seiner Längsachse l_{M} veränderlichen Innenquerschnitt auf. Durch die Reduzierung des Innenquerschnitts wird im eingebauten Zustand gewährleistet, dass die Wandlertaschen 7 und 9 das erste Rohr 3 des Rohrsystems nicht berühren, sodass ein Übersprechen auf das erste Rohr 3 zumindest reduziert werden kann.

Fig. 8 zeigt ein Ausführungsbeispiel eines Messrohrs 5 mit einem Flansch 6 und eine Leiterplatte 22. Die Leiterplatte 22 und der Messrohrflansch 6 weisen Bohrungen 23 auf, die derart aufeinander abgestimmt sind, dass der Flansch 6 mit der Leiterplatte 22 verschraubt werden kann.

Darüber hinaus weist die Leiterplatte 22 Kontaktelemente 24 auf, die mit den elektrischen Leitern der Ultraschallwandler oder weiterer Sensoren beispielsweise mittels einer Steckverbindung verbunden werden könne. Im dargestellten Ausführungsbeispiel sind die Kontaktelement 24 kreisförmig um die Aussparung der Leiterplatte 22 angeordnet. Jeder Ultraschallwandler und sofern vorhanden, jeder Sensor, kann mit einem Kontaktelement verbunden werden. Der Flansch 6 weist dafür weitere Bohrungen auf, durch die die elektrischen Leitungen der Ultraschallwandler geführt werden können.

Zudem weist die Leiterplatte 22 ein weiteres Kontaktelement 24 zur Verbindung mit der Steuer- und Auswerteeinheit auf. Das Kontaktelement 24 zur Anbindung an die Steuer und Auswerteeinheit 15 ist derart angeordnet, dass es im eingebauten Zustand außerhalb des Rohrsystems angeordnet ist. Die Leiterplatte 22 ist insgesamt derart ausgebildet, dass sie zwischen dem ersten Rohrflansch 3a des ersten Rohrs 3 und dem zweiten Rohrflansch 4a des zweiten Rohrs 4 eingeklemmt werden kann, sodass sowohl die Leiterplatte 22 als auch das Messrohr 5 in dem Rohrsystem fixiert sind.

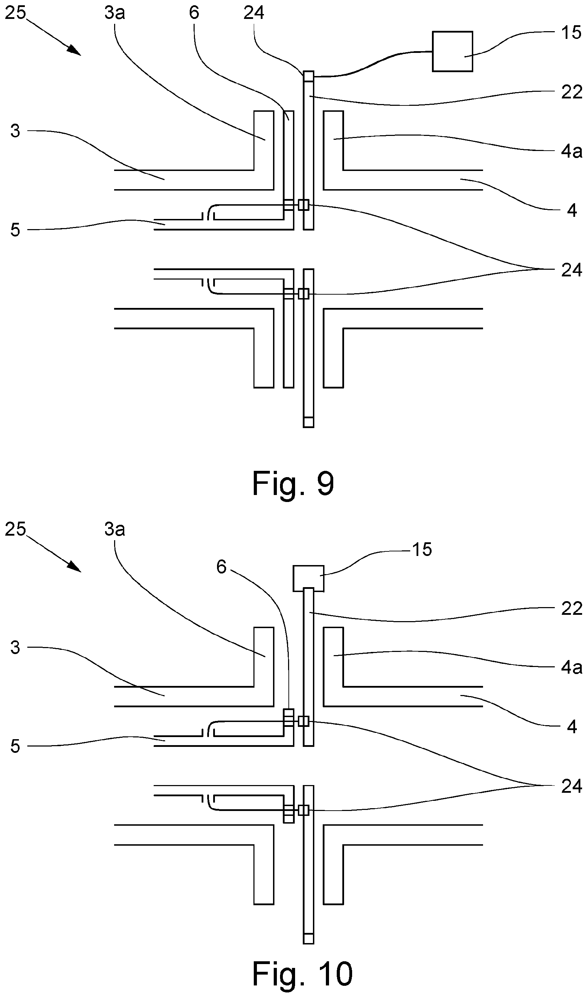

Fig. 9 zeigt ein Ausführungsbeispiel einer Messanordnung 25 mit einem Ultraschalldurchflussmessgerät 1 umfassend ein Messrohr 5 mit einem Messrohrflansch 6, wobei das Messrohr 5 Wandlertaschen 14 aufweist, in denen, hier nicht explizit dargestellte Ultraschallwandler 8, 10 angeordnet sind. Der Flansch 6 ist zwischen dem ersten Rohrflansch 3a und dem zweiten Rohrflansch 4a eingeklemmt. Zudem ist ein Leiterplatte 22 vorhanden, die ebenfalls zwischen dem ersten Rohrflansch 3a und dem zweiten Rohrflansch 4a eingeklemmt ist.

Die Leiterplatte 22 ist mit dem Messrohrflansch 6 verschraubt. Zudem weist die Leiterplatte 22 Kontaktelemente 24 auf, die mit den elektrischen Leitern der Ultraschallwandler verbunden sind. Hierfür sind in dem Flansch 6 Bohrungen vorhanden, durch die die elektrischen Leitungen geführt werden.

Weiterhin weist die Leiterplatte im Außenraum des Rohrsystems ein weiteres Kontaktelement 24 auf, das mit der ebenfalls im Außenraum des Rohrsystems angeordneten Steuer- und Auswerteeinheit 15 verbunden ist.

Um eine gute Anschaulichkeit zu gewährleisten, sind in der Darstellung Lücken zwischen den einzelnen Komponenten. Selbstverständlich sind im Betrieb der Messrohrflansch 6 und die Leiterplatte 22 dicht zwischen den Flanschen 3a und 4a eingeklemmt.

Insgesamt weist die dargestellte Messanordnung 25 den Vorteil auf, dass durch die Ausgeltung des Messrohrs 5 das Ultraschalldurchflussmessgerät 1 in verschiedenen Messumgebungen eingesetzt werden kann.

Fig. 10 zeigt ein weiteres Ausführungsbeispiel einer Messanordnung 25. Im Unterschied zu der in Fig. 9 dargestellten Messanordnung sind das Messrohr 5 und der Flansch 6 vollständig innerhalb des ersten Rohrs 3 angeordnet. Das Messrohr 5 ist über Bohrungen in dem Flansch 6 mit der Leiterplatte 22 verschraubt. Die Leiterplatte 22 ist zwischen den Rohrflanschen 3a und 4a festgeklemmt und bildet so eine Durchführung für die Signalübertragung. Gleichzeitig ist die Verbindung zwischen der Leiterplatte 22 und den Rohrflanschen eine dichte Verbindung.

Zudem ist die Steuer- und Auswerteeinheit 15 unmittelbar an der Leiterplatte 22 angeordnet und mit dieser mittels einer Klemmverbindung verbunden Diese Anordnung spart eine zusätzliche Kabelverbindung zwischen Steuer- und Auswerteeinheit und Leiterplatte, was sich wiederum kostensparend auswirkt.

### Bezugszeichen

- 1: Ultraschalldurchflussmessgerät
- 2: Rohrsystem
- 3: erstes Rohr
- 3a: erster Rohrflansch
- 4: zweites Rohr
- 4a: zweiter Rohrflansch
- 5: Messrohr
- 6: Flansch
- 7: erste Wandlertasche
- 8: erster Ultraschallwandler
- 9: zweite Wandlertasche
- 10: zweiter Ultraschallwandler
- 11: Messpfad
- 12: dünnwandiges Rohr
- 13: Außenraum des Messrohrs
- 14: weitere Wandlertaschen
- 15: Steuer- und Auswerteeinheit
- 16: weiterer Signalpfad
- 17: Haltevorsprung
- 18: Halteausnehmung
- 19: federndes Rastelement
- 20: elektrisch isolierende Schicht
- 21: akustisch isolierende Schicht
- 22: Leiterplatte
- 23: Bohrung
- 24: Kontaktelement

- w: Wandstärke Messrohr
- a: Erstreckung Wandlertasche
- l_{M}: Längsachse Messrohr

## Patentansprüche

1. Ultraschalldurchflussmessgerät (1) zum Einsetzen in ein erstes Rohr (3) eines Rohrsystems (2) an der Stelle einer Flanschverbindung des Rohrsystems (2), mit einem eine Längsachse (l_{M}) aufweisenden Messrohr (5) zum Führen eines fließfähigen Mediums und mit einem Flansch (6) zum zumindest mittelbaren Befestigen des Messrohrs (4) im Rohrsystem (2), wobei das Messrohr (5) wenigstens eine erste Wandlertasche (7) zur Aufnahme eines ersten Ultraschallwandlers (8) und wenigstens eine zweite Wandlertasche (9) zur Aufnahme eines zweiten Ultraschallwandlers (10) aufweist,
wobei in der ersten Wandlertasche (7) ein erster Ultraschallwandler (8) angeordnet ist, der als Ultraschallsender und/oder als Ultraschallempfänger ausgebildet ist und wobei in der zweiten Wandlertasche (9) ein zweiter Ultraschallwandler (10) angeordnet ist, der als Ultraschallsender und/oder als Ultraschallempfänger ausgebildet ist,
**dadurch gekennzeichnet,**
**dass** das Messrohr (5) als dünnwandiges Rohr (12) ausgebildet ist, derart, dass die Wandstärke (w) des Messrohrs (5) geringer ist als die Ausdehnung (a) der Wandlertaschen (7, 9) senkrecht zur Längsachse (l_{M}) des Messrohrs, und dass sich die Wandlertaschen (7, 9) in den Außenraum (13) des Messrohres (5) erstrecken.

2. Ultraschalldurchflussmessgerät (1) nach Anspruch 1, **dadurch gekennzeichnet, dass** das Messrohr (5) und der Flansch (6) einstückig ausgebildet sind, insbesondere wobei das Messrohr (5) und der Flansch (6) aus einem Kunststoff ausgebildet sind, und/oder wobei das Messrohr (5) und der Flansch (6) mittels eines generativen Fertigungsverfahrens hergestellt sind.

3. Ultraschalldurchflussmessgerät (1) nach Anspruch 1 oder 2, **dadurch gekennzeichnet, dass** das Messrohr (5) wenigstens eine weitere Wandlertasche (14) zur Aufnahme eines weiteren Ultraschallwandlers, eines Reflektors oder eines Abschlusskörpers zur Realisierung weiterer Messpfade (16, 16') aufweist, insbesondere dass das Messrohr (5) eine Mehrzahl von weiteren Wandlertaschen (14) zur Aufnahme weiterer Ultraschallwandler, Reflektoren oder Abschlusskörper zur Realisierung weiterer Messpfade (16, 16') aufweist.

4. Ultraschalldurchflussmessgerät (1) nach Anspruch 3, **dadurch gekennzeichnet, dass** wenigstens ein Drucksensor und/oder ein Temperatursensor in einer Wandlertasche (14.8, 14.9) angeordnet ist.

5. Ultraschalldurchflussmessgerät (1) nach einem der Ansprüche 1 bis 4, **dadurch gekennzeichnet, dass** die Ultraschallwandler (8, 10) und - sofern vorhanden - die Reflektoren, Abschlusskörper oder Sensoren und die Wandlertaschen (7, 9) korrespondierende Haltevorsprünge (17) und Haltevertiefungen (18) zur Befestigung der Ultraschallwandler und - sofern vorhanden - der Reflektoren, Abschlusskörper oder Sensoren in den Wandlertaschen (7, 9) aufweisen.

6. Ultraschalldurchflussmessgerät (1) nach einem der Ansprüche 1 bis 5, **dadurch gekennzeichnet, dass** die Ultraschallwandler (8, 10) und sofern vorhanden die Reflektoren, Abschlusskörper oder Sensoren und/oder die Wandlertaschen (7, 9) federnde und/oder elastische Rastelemente (19) zur Befestigung der Ultraschallwandler (8, 10) und - sofern vorhanden - der Reflektoren, Abschlusskörper oder Sensoren in den Wandlertaschen (7, 9) aufweisen.

7. Ultraschalldurchflussmessgerät (1) nach einem der Ansprüche 1 bis 6, **dadurch gekennzeichnet, dass** eine außerhalb des Rohrsystems (2) angeordnete Steuer- und Auswerteeinheit (15) vorgesehen ist und dass elektrische Leitungen von den Ultraschallwandlern (8, 10) und - sofern vorhanden - von den Reflektoren, den Abschlusskörpern oder den Sensoren, vorzugsweise durch den Flansch (6), zu der Steuer- und Auswerteeinheit (15) geführt sind.

8. Ultraschalldurchflussmessgerät nach Anspruch 7, **dadurch gekennzeichnet, dass** der Flansch (6) zumindest teilweise durch eine bedruckte Leiterplatte gebildet ist, die einen Teil der elektrisch leitenden Verbindung zwischen den Ultraschallwandlern (8, 10) und der Steuer- und Auswerteeinheit (15) realisiert.

9. Ultraschalldurchflussmessgerät (1) nach einem der Ansprüche 1 bis 6, **dadurch gekennzeichnet, dass** das Ultraschalldurchflussmessgerät eine im montierten Zustand außerhalb des Rohrsystems (2) angeordnete Steuer- und Auswerteeinheit (15) aufweist, wobei die Steuer- und Auswerteeinheit zumindest mit den Ultraschallwandlern (8,10) über elektrische Leitungen verbunden ist, und dass das Ultraschalldurchflussmessgerät eine Leiterplatte aufweist, wobei die Leiterplatte im montierten Zustand derart zwischen dem ersten Rohrflansch des ersten Rohrs und dem zweiten Rohrflansch des zweiten Rohrs angeordnet werden kann, dass eine elektrische Verbindung von dem Innenraum des Rohrsystems in den Außenraum des Rohrsystems realisiert.

10. Ultraschalldurchflussmessgerät (1) nach einem der Ansprüche 1 bis 9, **dadurch gekennzeichnet, dass** das Messrohr (5) auf seiner Außenseite mit einer elektrisch isolierenden Schicht (20) beschichtet ist, insbesondere wobei auch der Flansch zumindest teilweise mit einer elektrisch isolierenden Schicht (20) beschichtet ist.

11. Ultraschalldurchflussmessgerät (1) nach einem der Ansprüche 1 bis 10, **dadurch gekennzeichnet, dass** das Messrohr (5) auf seiner Außenseite mit einer akustisch isolierenden Schicht (21) beschichtet ist.

12. Ultraschalldurchflussmessgerät (1) nach einem der Ansprüche 1 bis 11, **dadurch gekennzeichnet, dass** das Messrohr (5) einen konstanten Innenquerschnitt aufweist oder dass das Messrohr (5) entlang seiner Längsachse (l_{M}) einen veränderlichen Innenquerschnitt aufweist.

13. Ultraschalldurchflussmessgerät (1) nach einem der Ansprüche 1 bis 12, **dadurch gekennzeichnet, dass** der Innendurchmesser des Messrohrs (5) am Übergang zu dem Rohrsystem (1) dem Innenrohrdurchmesser des Rohrsystems entspricht oder dass der Innendurchmesser des Messrohrs (5) am Übergang zu dem Rohrsystem (2) geringer als der Innenrohrdurchmesser des Rohrsystems ist.

14. Messanordnung umfassend ein Ultraschalldurchflussmessgerät nach einem der Ansprüche 1 bis 13 und zumindest ein erstes Rohr des Rohrsystems, wobei das Messrohr (5) in das erste Rohr (3) eingesetzt ist, **dadurch gekennzeichnet, dass** das erste Rohr (3) und das Messohr (5) derart aufeinander abgestimmt sind, dass die Wandlertaschen (7) das erste Rohr (3) nicht berühren.
